# EUROPÄISCHE PATENTSCHRIFT

(11) **EP 2 808 211 B1**
(45) Veröffentlichungstag und Bekanntmachung des Hinweises auf die Patenterteilung: **03.02.2021**
(21) Anmeldenummer: 13005924.9
(22) Anmeldetag: 19.12.2013
(51) Int. Cl.: B60T 17/02, F04B 39/06

(54) **Leitungssystem für ein Kraftfahrzeug**
Conduit system for a motor vehicle
Système de conduites pour un véhicule automobile

(30) Priorität: 25.04.2013 DE 102013007186
(43) Veröffentlichungstag der Anmeldung: 03.12.2014
(73) Patentinhaber: MAN Truck & Bus SE, 80995 München (DE)
(72) Erfinder: Hofstetter, Thomas, 84048 Mainburg (DE); Ittlinger, Reinhard, 94363 Oberschneiding (DE); Förster, Joachim, 82223 Eichenau (DE)
(74) Vertreter: v. Bezold & Partner Patentanwälte - PartG mbB

(56) Entgegenhaltungen:
- EP-A1- 0 872 270
- DE-A1- 19 600 377
- DE-B3-102005 053 949

## Beschreibung

Die Erfindung betrifft ein Leitungssystem für ein Kraftfahrzeug, vorzugsweise ein Nutzfahrzeug. Das Leitungssystem umfasst einen Gaspresser zur Beförderung eines Gases, einen Gastrockner zum Trocknen des Gases und eine Kühleinrichtung, z.B. eine Kühlwendel, zum Kühlen des Gases.

DE 196 00 377 A1 offenbart eine Druckgasanlage mit einem einerseits über eine Anströmleitung mit einer Druckbeschaffungsanlage und andererseits mit einer Verbraucheranlage verbundenen Gastrockner, Parallel zu der Anströmleitung ist eine Umgehungsleitung angeordnet, mit einer druckgesteuerten, ab einem vorbestimmten Öffnungsdruck für die Strömung von der Druckbeschaffungsanlage zum Gastrockner durchlässigen, Sperreinrichtung. Ferner kann zum Stand der Technik auf die EP 0 872 270 A1 und die DE 10 2005 053 949 B3 verwiesen werden.

Bei Nutzfahrzeugen werden wegen der großen Fahrzeugmassen üblicherweise pneumatische Fremdkraftbremsanlagen eingesetzt. Die pneumatischen Fremdkraftbremsanlagen funktionieren wie folgt: Luft wird in verdichteter Form als gespeicherte Energie genutzt. Diese Energie wird dann im Bedarfsfall sporadisch für Bremsungen des Nutzfahrzeugs verwendet und somit verbraucht. Mittels verschiedensten Bauarten von Luftpressern kann die Energie kontinuierlich oder im Bedarfsfall wieder gespeichert werden, z.B. in Druckluftkesseln. Luft als Energieträger hat jedoch den Nachteil, dass in der Luft Feuchtigkeit gelöst ist. Diese Feuchtigkeit fällt bei Verdichtung der Luft in Form von Kondenswasser aus. Das Kondenswasser muss aus der verdichteten Luft herausgefiltert werden, da andernfalls die Gefahr besteht, dass die Fremdkraftbremsanlage bei Temperaturen unter dem Gefrierpunkt einfriert. Am Markt verfügbare Trockenmittel arbeiten nur bis zu einer maximalen Temperatur von ungefähr 65 °C zu 100 %. Bei höheren Temperaturen sinkt die Trockenleistung exponentiell. Da sich die Luft bei der Verdichtung erwärmt, muss sie vor einem Lufttrockner gekühlt werden. Bei der Kühlung der Luft fällt zusätzlich Kondenswasser aus. Aus Package- und Kostengründen werden Kühleinrichtungen zur Kühlung der Luft meist als Rohrwendel ausgeführt.

Nachteilhaft daran ist, dass in der Rohrwendel das ausgefallene Wasser gefrieren kann und die Rohrwendel somit langsam zuwächst, bis das Eis die Rohrwendel letztendlich ganz verschließt. Das Nutzfahrzeug ist daraufhin nur mehr für eine sehr Kurze Strecke befahrbar, nämlich so lange, wie noch genügend Energie in den Luft-Vorratsbehältern vorhanden ist. Ist die Energie aufgebraucht, kann das Nutzfahrzeug quasi nur noch einmal mit einer Hilfsbremseinrichtung gebremst werden und anschließend nicht mehr bewegt werden.

Eine Aufgabe der Erfindung ist es, ein verbessertes und/oder alternatives Leitungssystem für ein Nutzfahrzeug zu schaffen. Diese Aufgabe kann mit den Merkmalen des unabhängigen Anspruchs gelöst werden. Vorteilhafte Weiterbildungen der Erfindung sind den Unteransprüchen und der nachfolgenden Beschreibung zu entnehmen.

Die Erfindung schafft ein Leitungssystem für ein Nutzfahrzeug, vorzugsweise einen Lastkraftwagen oder einen Omnibus. Das Leitungssystem umfasst einen Gaspresser zur Beförderung eines Gases, einen Gastrockner zum Trocknen des Gases und eine Kühleinrichtung, insbesondere eine Kühlwendel, zum Kühlen des Gases, die vorzugsweise strömungstechnisch zwischen dem Gaspresser und dem Gastrockner angeordnet ist. Das Leitungssystem zeichnet sich insbesondere dadurch aus, dass es eine Bypasseinrichtung mit einer Bypassleitung für das Gas aufweist, über die das Gas unter Umgehung der Kühleinrichtung zweckmäßig mittelbar oder unmittelbar zu dem Gastrockner geführt werden kann, vorzugsweise dann, wenn eine Gaspassage über die Kühleinrichtung nicht oder nur unzureichend möglich ist. Der Fall, dass eine Gaspassage über die Kühleinrichtung nicht oder nur unzureichend möglich ist, tritt insbesondere dann auf, wenn die Kühleinrichtung verstopft, insbesondere zugefroren ist.

Es ist möglich, dass die Bypasseinrichtung eine Ventileinrichtung (z.B. ein Klappen- und/oder Überdruckventil) zum zweckmäßig selbsttätigen Öffnen der Bypassleitung aufweist, wenn der am Ventileinrichtungs-Eingang anstehende Druck einen vorbestimmten Wert übersteigt. Der am Ventileinrichtungs-Eingang anstehende Druck steigt z.B., wenn die Kühleinrichtung zunehmend zugefriert. Die Ventileinrichtung ist vorzugsweise im Normalfall geschlossen.

Es ist möglich, dass die Bypassleitung schräg und/oder rechtwinklig zur regulären Hauptströmungsrichtung des Gases abzweigt. Vorzugsweise zweigt die Bypassleitung schräg und/oder rechtwinklig von dem nachfolgend erwähnten ersten Teilabschnitt der Bypasseinrichtung ab.

Die Bypasseinrichtung umfasst einen zweckmäßig ersten Teilabschnitt mit einem Durchgangskanal. Der erste Teilabschnitt und somit dessen Durchgangskanal ist insbesondere strömungstechnisch zwischen dem Gaspresser und der Kühleinrichtung in das Leitungssystem integriert.

Es ist möglich, dass die Bypasseinrichtung zweckmäßig einen zweiten Teilabschnitt mit einem Durchgangskanal aufweist. Der zweite Teilabschnitt und somit dessen Durchgangskanal ist insbesondere strömungstechnisch zwischen der Kühleinrichtung und dem Gastrockner in das Leitungssystem integriert.

Es ist möglich, dass die Bypassleitung sich zwischen dem Durchgangskanal des ersten Teilabschnitts und dem Durchgangskanal des zweiten Teilabschnitts erstreckt und insbesondere außermittig versetzt von dem Durchgangskanal des ersten Teilabschnitts abzweigt und/oder außermittig versetzt in den Durchgangskanal des zweiten Teilabschnitts mündet.

Die Bypassleitung umfasst einen Strömungsquerschnitt, der kleiner ist als der Strömungsquerschnitt des Durchgangskanals des ersten Teilabschnitts und/oder des zweiten Teilabschnitts.

Die Bypasseinrichtung ist vorzugsweise so ausgeführt, dass eine volle Gasmenge bei maximaler Drehzahl des Gaspressers über die Bypasseinrichtung strömen kann, wenn die Gaspassage über die Kühleinrichtung, insbesondere die Kühleinrichtung, verstopft ist, und/oder eine nur vernachlässigbare Gasmenge (z.B. weniger als 15%, weniger als 10% oder sogar weniger als 5% der vom Gaspresser geförderten Gesamtgasmenge) über die Bypasseinrichtung strömen kann, wenn die Gaspassage über die Kühleinrichtung, insbesondere die Kühleinrichtung, verstopfungsfrei ist und somit zweckmäßig regulär betrieben werden kann.

Die Bypasseinrichtung kann somit einerseits mit einer öffenbaren Ventileinrichtung versehen sein. Ebenso kann die Bypasseinrichtung durch vordefinierte Strömungsverhältnisse eine Ventilfunktion erzeugen. Für beide Fälle gilt insbesondere, dass im Normalfall keine oder nur sehr geringe Gasmengen die Bypasseinrichtung passieren können, während im Störungsfall (z.B. einer Verstopfung der Kühleinrichtung) das Gas in ausreichender Menge die Bypasseinrichtung hin zum Gastrockner passieren kann.

Es ist möglich, dass der erste Teilabschnitt eine Anschlusskonfiguration (z.B. eine Gewindekonfiguration) aufweist, mittels der er strömungstechnisch zwischen den Gaspresser und die Kühleinrichtung in das Leitungssystem integriert ist. Alternativ oder ergänzend kann der zweite Teilabschnitt eine Anschlusskonfiguration (z.B. eine Gewindekonfiguration) aufweisen, mittels der er strömungstechnisch zwischen die Kühleinrichtung und den Gastrockner in das Leitungssystem integriert ist.

Die Bypasseinrichtung, insbesondere deren erster Teilabschnitt, kann strömungstechnisch unmittelbar vor der Kühleinrichtung angeordnet sein und/oder an der Kühleinrichtung montiert sein. Ebenso kann die Bypasseinrichtung, insbesondere deren zweiter Teilabschnitt, strömungstechnisch unmittelbar hinter der Kühleinrichtung angeordnet sein und/oder an der Kühleinrichtung montiert sein.

Es ist möglich, dass die Bypasseinrichtung als Armaturenteil ausgeführt ist und z.B. die Bypassleitung und vorzugsweise der erste Teilabschnitt und/oder der zweite Teilabschnitt zumindest abschnittsweise in das Armaturenteil integriert ist. Alternativ oder ergänzend kann die Bypassleitung zumindest abschnittsweise als Leitungsrohr oder Leitungsschlauch ausgeführt sein und z.B. direkt in den Gastrockner münden.

Der Gastrockner ist zweckmäßig mit einem Gasverbraucher verbunden, um den Gasverbraucher mit Gas zu versorgen. Der Gasverbraucher ist vorzugsweise eine Fremdkraftbremsanlage für das Nutzfahrzeug.

Zu erwähnen ist, dass im Rahmen der Erfindung das Merkmal "verstopft" bzw. "zugefroren" sich nicht zwangsläufig auf eine komplette Verstopfung eines Strömungsquerschnitts beziehen muss, sondern sich auch auf einen nur reduzierten Strömungsquerschnitt und somit zweckmäßig eine nur teilweise Verstopfung beziehen kann.

Zu erwähnen ist ferner, dass das Medium Gas vorzugsweise Luft ist.

Die Erfindung ist nicht auf ein Leitungssystem beschränkt, sondern umfasst ferner ein Nutzfahrzeug, z.B. einen Lastkraftwagen oder einen Omnibus, mit einem Leitungssystem wie hierin beschrieben.

Die oben beschriebenen Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungen der Erfindung in Verbindung mit den beigefügten Figuren.
- Figur 1: zeigt eine schematische Ansicht eines Leitungssystems für ein Nutzfahrzeug gemäß einer Ausführungsform der Erfindung,
- Figur 2: zeigt eine perspektivische Ansicht eines Teilbereichs eines Leitungssystems gemäß einer anderen Ausführungsform der Erfindung,
- Figur 3: zeigt eine perspektivische Ansicht einer Bypasseinrichtung gemäß einer Ausführungsform der Erfindung und
- Figur 4: zeigt eine Querschnittsansicht der Bypasseinrichtung aus Figur 3.

Die in den Figuren gezeigten Ausführungsformen stimmen teilweise überein, wobei ähnliche oder identische Teile mit den gleichen Bezugszeichen versehen sind, und zu deren Erläuterung auch auf die Beschreibung anderer Ausführungsformen verwiesen wird, um Wiederholungen zu vermeiden.

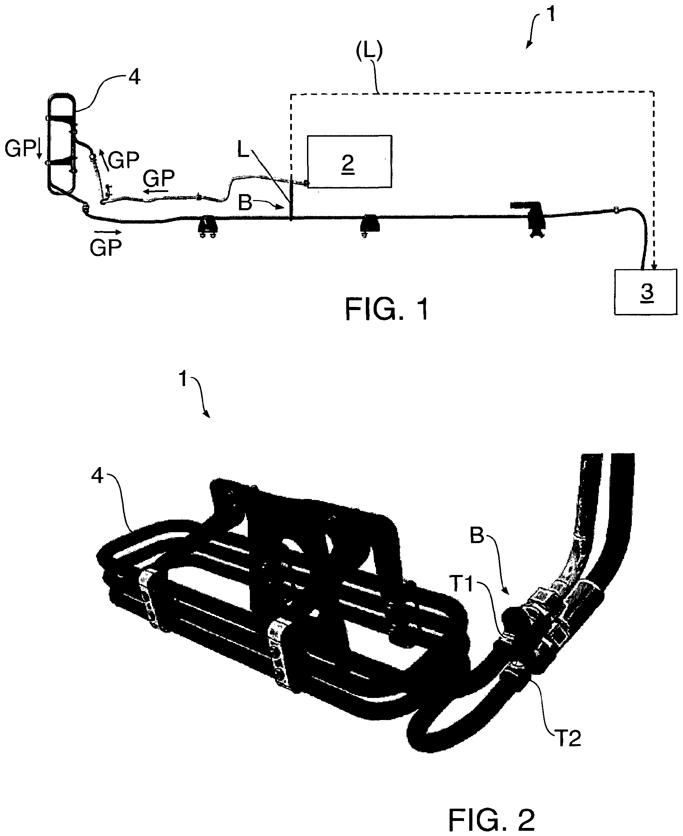

Figur 1 zeigt eine schematische Ansicht eines Leitungssystems 1 für ein Nutzfahrzeug, insbesondere einen Lastkraftwagen oder einen Omnibus. Das Leitungssystem 1 umfasst einen Gaspresser 2 zur Beförderung eines Gases, einen Gastrockner 3 zum Trocknen des Gases und eine Kühleinrichtung 4, insbesondere eine Kühlwendel, zum Kühlen des Gases. Die Kühleinrichtung 4 ist strömungstechnisch zwischen dem Gaspresser 2 und dem Gastrockner 3 angeordnet. Das Leitungssystem 1 umfasst strömungstechnisch hinter dem Gastrockner 3 noch zumindest einen nicht gezeigten, mit dem getrockneten Gas zu versorgenden Gasverbraucher.

Das Leitungssystem 1 umfasst zudem eine Bypasseinrichtung B mit einer Bypassleitung L für das Gas, über die Gas unter Umgehung der Kühleinrichtung 4 zu dem Gastrockner 3 führbar ist, wenn eine Gaspassage GP über die Kühleinrichtung 4 nicht oder nur unzureichend möglich ist, was insbesondere dann der Fall ist, wenn die Kühleinrichtung 4 zumindest teilweise verstopft, insbesondere zumindest teilweise zugefroren ist.

In dem in Figur 1 gezeigten Ausführungsbeispiel zweigt die Bypassleitung L von einem sich strömungstechnisch zwischen dem Gaspresser 2 und der Kühleinrichtung 4 erstreckenden Leitungsabschnitt des Leitungssystems 1 ab und mündet in einen sich strömungstechnisch zwischen der Kühleinrichtung 4 und dem Gastrockner 3 erstreckenden Leitungsabschnitt des Leitungssystems 1. Alternativ kann die Bypassleitung auch direkt in den Gastrockner 3 münden, wie in Figur 1 schematisch durch den gestrichelten Pfeil (L) angedeutet ist. Die Bypasseinrichtung B weist eine nicht näher gezeigte bewegliche Ventileinrichtung auf, die im Normalfall - also wenn eine ausreichende Gaspassage GP über die Kühleinrichtung 4 möglich ist - geschlossen ist und erst dann selbsttätig öffnet, wenn der am Ventileinrichtungs-Eingang anstehende Druck einen vorbestimmten Wert übersteigt. Der am Ventileinrichtungs-Eingang anstehende Druck steigt, wenn ein Teil der Gaspassage GP, insbesondere die Kühleinrichtung 4 allmählich zugefriert und somit verstopft. Die Ventileinrichtung kann als an sich herkömmliches Klappen- und/oder Überdruckventil ausgeführt sein.

Figur 2 zeigt eine perspektivische Ansicht eines Teilbereichs eines Leitungssystems 1 gemäß einer anderen Ausführungsform der Erfindung. Die Bypasseinrichtung B ist als Armaturenteil ausgeführt und umfasst einen ersten Teilabschnitt T1 und einen zweiten Teilabschnitt T2. Die Bypasseinrichtung B, insbesondere der erste Teilabschnitt T1 ist strömungstechnisch unmittelbar vor der Kühleinrichtung 4 angeordnet und an der Kühleinrichtung 4 montiert. Die Bypasseinrichtung B, insbesondere der zweite Teilabschnitt T2 ist strömungstechnisch unmittelbar hinter der Kühleinrichtung 4 angeordnet und an der Kühleinrichtung 4 montiert.

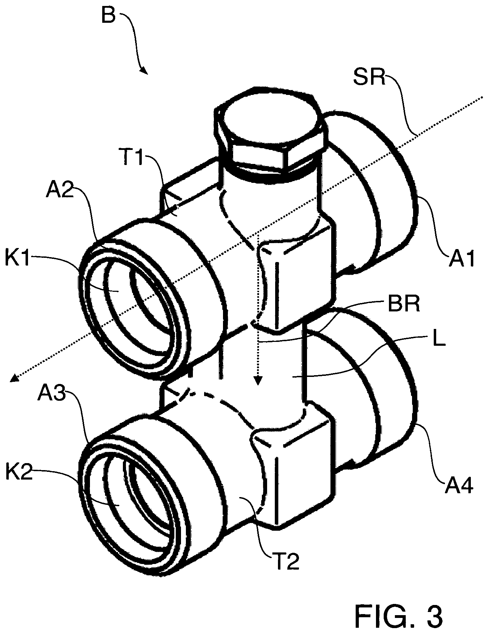

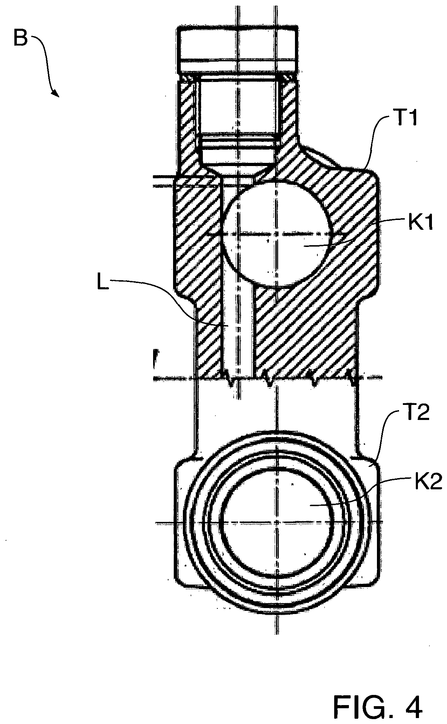

Figur 3 zeigt eine perspektivische Ansicht einer Bypasseinrichtung B gemäß einer wiederum anderen Ausführungsform der Erfindung, während Figur 4 eine Querschnittsansicht der Bypasseinrichtung B aus Figur 3 zeigt. Unter Bezugnahme auf die Figuren 3 und 4 umfasst die Bypasseinrichtung B einen ersten Teilabschnitt T1 mit einem Durchgangskanal K1. Der erste Teilabschnitt T1 und somit der Durchgangskanal K1 ist strömungstechnisch zwischen den Gaspresser 2 und die Kühleinrichtung 4 in das Leitungssystem 1 zu integrieren. Die Bypasseinrichtung B umfasst zudem einen zweiten Teilabschnitt T2 mit einem Durchgangskanal K2. Der zweite Teilabschnitt T2 und somit der Durchgangskanal K2 ist strömungstechnisch zwischen die Kühleinrichtung 4 und den Gastrockner 3 in das Leitungssystem 1 zu integrieren. Die Bypassleitung L verbindet den Durchgangskanal K1 mit dem Durchgangskanal K2.

Der erste Teilabschnitt T1 umfasst eine Anschlusskonfiguration A1 und A2. Die Anschlusskonfiguration A1 dient dazu, den ersten Teilabschnitt T1 eingangsseitig mit einem Leitungsrohr oder einem Leitungsschlauch des Leitungssystems 1 zu verbinden, während die Anschlusskonfiguration A2 dazu dient, den ersten Teilabschnitt T1 ausgangsseitig mit der Kühleinrichtung 4 zu verbinden. Alternativ kann die Anschlusskonfiguration A2 dazu dienen, den ersten Teilabschnitt T1 ausgangsseitig mit einem Leitungsrohr oder einem Leitungsschlauch des Leitungssystems 1 zu verbinden.

Der zweite Teilabschnitt T2 umfasst eine Anschlusskonfiguration A3 und A4. Die Anschlusskonfiguration A3 dient dazu, den zweiten Teilabschnitt T2 eingangsseitig mit der Kühleinrichtung 4 zu verbinden, während die Anschlusskonfiguration A4 dazu dient, den zweiten Teilabschnitt T2 ausgangsseitig mit einem Leitungsrohr oder einem Leitungsschlauch des Leitungssystems 1 zu verbinden. Alternativ kann die Anschlusskonfiguration A3 dazu dienen, den zweiten Teilabschnitt T2 eingangsseitig mit einem Leitungsrohr oder einem Leitungsschlauch des Leitungssystems 1 zu verbinden.

Die Bypassleitung L ist so angeordnet, dass sie im Wesentlichen rechtwinklig zum Durchgangskanal K1 und/oder im Wesentlichen rechtwinklig zur regulären Hauptströmungsrichtung SR des Gases abzweigt, was durch den Pfeil BR schematisch angedeutet ist.

Die Bypassleitung L ist ferner so ausgeführt, dass sie außermittig versetzt von dem Durchgangskanal K1 des ersten Teilabschnitts T1 abzweigt und vorzugsweise außermittig versetzt in den Durchgangskanal K2 des zweiten Teilabschnitts T2 mündet. Der Strömungsquerschnitt der Bypassleitung L ist kleiner als der Strömungsquerschnitt des Durchgangskanals K1 und vorzugsweise kleiner als der Strömungsquerschnitt des Durchgangskanals K2.

Die Bypasseinrichtung B der Figuren 3 und 4 umfasst keine bewegliche Ventileinrichtung wie unter Bezugnahme auf die Figur 1 erwähnt, sondern erzeugt ein intelligentes Strömungsverhältnis. Die Bypasseinrichtung B ist einerseits so ausgeführt, dass eine volle Gasmenge bei maximaler Drehzahl des Gaspressers 2 die Bypasseinrichtung B passieren kann, wenn die Gaspassage GP, insbesondere die Kühleinrichtung 4 vollständig blockiert ist. Die Bypasseinrichtung B ist andererseits so ausgeführt, dass nur eine vernachlässigbare Gasmenge, z.B. weniger als 10% der vom Gaspresser 2 geförderten Gesamtgasmenge, die Bypasseinrichtung B passieren kann, wenn die Gaspassage GP, insbesondere die Kühleinrichtung 4 im Normalzustand betrieben wird und somit zumindest im Wesentlichen verstopfungsfrei ist.

Die Bypasseinrichtung B der Figuren 3 und 4 ist als Armaturenteil ausgeführt, in das die Bypassleitung L integriert ist. Es sind allerdings Ausführungsformen möglich, bei denen die Bypassleitung L z.B. zumindest teilweise in einem Armaturenteil verläuft und/oder zumindest teilweise als Leitungsrohr oder Leitungsschlauch ausgeführt ist, und z.B. wie in Figur 1 durch den gestrichelten Pfeil (L) angedeutet direkt in den Gastrockner 3 mündet. Die zuvor beschriebenen Ausführungsformen wurden unter Bezugnahme auf das Medium Gas beschrieben. Das Medium Gas ist vorzugsweise Luft.

## Patentansprüche

1. Leitungssystem (1) für ein Kraftfahrzeug, vorzugsweise Nutzfahrzeug, mit:
- einem Gaspresser (2) zur Beförderung eines Gases,
- einem Gastrockner (3) zum Trocknen des Gases und
- einer Kühleinrichtung (4), insbesondere einer Kühlwendel, zum Kühlen des Gases,
wobei
- das Leitungssystem (1) eine Bypasseinrichtung (B) mit einer Bypassleitung (L) für das Gas aufweist, über die das Gas unter Umgehung der Kühleinrichtung (4) zu dem Gastrockner (3) führbar ist,
**dadurch gekennzeichnet, dass**
- die Bypasseinrichtung (B) einen ersten Teilabschnitt (T1) mit einem Durchgangskanal (K1) aufweist und die Bypassleitung (L) an den Durchgangskanal (K1) des ersten Teilabschnitts (T1) außermittig versetzt angeschlossen ist, und/oder
- die Bypasseinrichtung (B) als Armaturenteil ausgeführt ist.

2. Leitungssystem (1) nach Anspruch 1, **dadurch gekennzeichnet, dass** die Bypasseinrichtung (B) eine Ventileinrichtung zum vorzugsweise selbsttätigen Öffnen der Bypassleitung (L) aufweist, wenn der am Ventileinrichtungs-Eingang anstehende Druck einen vorbestimmten Wert übersteigt.

3. Leitungssystem (1) nach Anspruch 1 oder 2, **dadurch gekennzeichnet, dass** die Bypassleitung (L) zur regulären Hauptströmungsrichtung (SR) des Gases schräg und/oder rechtwinklig abzweigt (BR).

4. Leitungssystem (1) nach einem der vorhergehenden Ansprüche, **dadurch gekennzeichnet, dass** der Durchgangskanal (K1) strömungstechnisch zwischen dem Gaspresser (2) und der Kühleinrichtung (4) angeordnet ist.

5. Leitungssystem (1) nach einem der vorhergehenden Ansprüche, **dadurch gekennzeichnet, dass** die Bypasseinrichtung (B) einen zweiten Teilabschnitt (T2) mit einem Durchgangskanal (K2) aufweist, der vorzugsweise strömungstechnisch zwischen der Kühleinrichtung (4) und dem Gastrockner (3) angeordnet ist.

6. Leitungssystem (1) nach Anspruch 5, **dadurch gekennzeichnet, dass** die Bypassleitung (L) an den Durchgangskanal (K2) des zweiten Teilabschnitts (T2) außermittig versetzt angeschlossen ist.

7. Leitungssystem (1) nach einem der vorhergehenden Ansprüche, **dadurch gekennzeichnet, dass** die Bypassleitung (L) einen Strömungsquerschnitt aufweist, der kleiner ist als der Strömungsquerschnitt des Durchgangskanals (K1) des ersten Teilabschnitts (T1).

8. Leitungssystem (1) nach einem der vorhergehenden Ansprüche, **dadurch gekennzeichnet, dass** die Bypasseinrichtung (B) so ausgeführt ist, dass eine volle Gasmenge bei maximaler Drehzahl des Gaspressers (2) über die Bypasseinrichtung (B) strömen kann, wenn die Gaspassage (GP) über die Kühleinrichtung (4) verstopft ist, und/oder dass nur eine vernachlässigbare Gasmenge über die Bypasseinrichtung (B) strömen kann, wenn die Gaspassage (GP) über die Kühleinrichtung (4) verstopfungsfrei ist.

9. Leitungssystem (1) nach einem der vorhergehenden Ansprüche, **dadurch gekennzeichnet, dass** der erste Teilabschnitt (T1) eine Anschlusskonfiguration (A1, A2) aufweist, mittels der er strömungstechnisch zwischen den Gaspresser (2) und die Kühleinrichtung (4) in das Leitungssystem (1) integriert ist.

10. Leitungssystem (1) nach einem der Ansprüche 5 bis 9, **dadurch gekennzeichnet, dass** der zweite Teilabschnitt (T2) eine Anschlusskonfiguration (A3, A4) aufweist, mittels der er strömungstechnisch zwischen die Kühleinrichtung (4) und den Gastrockner (3) in das Leitungssystem (1) integriert ist.

11. Leitungssystem (1) nach einem der vorhergehenden Ansprüche, **dadurch gekennzeichnet, dass** die Bypasseinrichtung (B), insbesondere der erste Teilabschnitt (T1), strömungstechnisch unmittelbar vor der Kühleinrichtung (4) angeordnet ist und/oder an der Kühleinrichtung (4) montiert ist.

12. Leitungssystem (1) nach einem der vorhergehenden Ansprüche, **dadurch gekennzeichnet, dass** die Bypasseinrichtung (B), insbesondere der zweite Teilabschnitt (T2), strömungstechnisch unmittelbar hinter der Kühleinrichtung (4) angeordnet ist und/oder an der Kühleinrichtung (4) montiert ist.

13. Leitungssystem (1) nach einem der vorhergehenden Ansprüche, **dadurch gekennzeichnet, dass** die Bypassleitung (L) über ein Leitungsrohr oder einen Leitungsschlauch unmittelbar in den Gastrockner (3) mündet.

14. Leitungssystem (1) nach einem der vorhergehenden Ansprüche, **dadurch gekennzeichnet, dass** der Gastrockner (3) mit einem Gasverbraucher, insbesondere einer Fremdkraftbremsanlage des Nutzfahrzeugs, verbunden ist, um ihn mit dem Gas zu versorgen.

15. Nutzfahrzeug, vorzugsweise Lastkraftwagen oder Omnibus, mit einem Leitungssystem (1) nach einem der vorhergehenden Ansprüche.

## Claims

1. A piping system (1) for a motor vehicle, preferably a commercial vehicle, having
- a gas compressor (2) for conveying a gas;
- a gas dryer (3) for drying the gas; and
- a cooling device (4), in particular a cooling coil, for cooling the gas;
wherein
- the piping system (1) has a bypass device (B) having a bypass line (L) for the gas, the latter while bypassing the cooling device (4) being able to be guided to the gas dryer (3),
**characterized in that**
- the bypass device (B) has a first sub-portion (T1) having a passage duct (K1), and the bypass line (L) is connected so as to be eccentrically offset to the passage duct (K1) of the first sub-portion (T1); and/or
- the bypass device (B) is embodied as a pipe fitting.

2. The piping system (1) according to Claim 1, **characterized in that** the bypass device (B) has a valve device for preferably opening the bypass line (L) in a self-acting manner when the pressure prevailing on the valve device inlet exceeds a predetermined value.

3. The piping system (1) according to Claim 1 or 2, **characterized in that** the bypass line (L) branches off (BR) obliquely and/or orthogonally to the normal main direction of flow (SR) of the gas.

4. The piping system (1) according to one of the preceding claims, **characterized in that** the passage duct (K1) is fluidically disposed between the gas compressor (2) and the cooling device (4).

5. The piping system (1) according to one of the preceding claims, **characterized in that** the bypass device (B) has a second sub-portion (T2) having a passage duct (K2) which fluidically is preferably disposed between the cooling device (4) and the gas dryer (3).

6. The piping system (1) according to Claim 5, **characterized in that** the bypass line (L) is connected so as to be eccentrically offset to the passage duct (K2) of the second sub-portion (T2).

7. The piping system (1) according to one of the preceding claims, **characterized in that** the bypass line (L) has a flow cross section which is smaller than the flow cross section of the passage duct (K1) of the first sub-portion (T1).

8. The piping system (1) according to one of the preceding claims, **characterized in that** the bypass device (B) is embodied such that, with the gas compressor (2) at the maximum rotating speed, a full quantity of gas can flow by way of the bypass device (B) when the gas passage (GP) by way of the cooling device (4) is blocked, and/or that only a negligible quantity of gas can flow by way of the bypass device (B) when the gas passage (GP) by way of the cooling device (4) is unblocked.

9. The piping system (1) according to one of the preceding claims, **characterized in that** the first sub-portion (T1) has a connection configuration (A1, A1) by means of which said first sub-portion (T1) is fluidically integrated in the piping system (1) so as to be between the gas compressor (2) and the cooling device (4).

10. The piping system (1) according to one of Claims 5 to 9, **characterized in that** the second sub-portion (T2) has a connection configuration (A3, A4) by means of which said second sub-portion (T2) is fluidically integrated in the piping system (1) so as to be between the cooling device (4) and the gas dryer (3).

11. The piping system (1) according to one of the preceding claims, **characterized in that** the bypass device (B), in particular the first sub-portion (T1), is fluidically disposed directly ahead of the cooling device (4) and/or is assembled on the cooling device (4).

12. The piping system (1) according to one of the preceding claims, **characterized in that** the bypass device (B), in particular the second sub-portion (T2), is fluidically disposed directly behind the cooling device (4) and/or is assembled on the cooling device (4).

13. The piping system (1) according to one of the preceding claims, **characterized in that** the bypass line (L) by way of a ducting pipe or a ducting hose opens directly into the gas dryer (3).

14. The piping system (1) according to one of the preceding claims, **characterized in that** the gas dryer (3) is connected to a gas consumer, in particular a power braking system, of the commercial vehicle, so as to supply said gas consumer with gas.

15. A commercial vehicle, preferably a truck or bus, having a piping system (1) according to one of the preceding claims.

## Revendications

1. Système de conduites (1) pour un véhicule automobile, de préférence un véhicule utilitaire, comprenant :
- un presseur de gaz (2) pour transporter un gaz,
- un sécheur de gaz (3) pour sécher le gaz, et
- un dispositif de refroidissement (4), en particulier un serpentin réfrigérant, pour refroidir le gaz, dans lequel
- le système de conduites (1) présente un dispositif de dérivation (B) doté d'une conduite de dérivation (L) pour le gaz par laquelle le gaz peut être amené au sécheur de gaz (3) en contournant le dispositif de refroidissement (4),
**caractérisé en ce que**
le dispositif de dérivation (B) présente un premier tronçon (T1) doté d'un canal de passage (Kl), et la conduite de dérivation (L) est connectée au canal de passage (K1) du premier tronçon (T1) avec un décalage excentrique, et/ou
- le dispositif de dérivation (B) est réalisé sous la forme d'une pièce de robinetterie.

2. Système de conduites (1) selon la revendication 1, **caractérisé en ce que** le dispositif de dérivation (B) présente un dispositif de vanne pour l'ouverture de préférence automatique de la conduite de dérivation (L) si la pression présente à l'entrée de dispositif de vanne dépasse une valeur prédéterminée.

3. Système de conduites (1) selon la revendication 1 ou 2, **caractérisé en ce que** la conduite de dérivation (L) bifurque en oblique et/ou à angle droit (BR) par rapport à la direction d'écoulement principale normale (SR) du gaz.

4. Système de conduites (1) selon l'une quelconque des revendications précédentes, **caractérisé en ce que** le canal de passage (K1) est disposé fluidiquement entre le presseur de gaz (2) et le dispositif de refroidissement (4).

5. Système de conduites (1) selon l'une quelconque des revendications précédentes, **caractérisé en ce que** le dispositif de dérivation (B) présente un deuxième tronçon (T2) doté d'un canal de passage (K2) qui est disposé de préférence fluidiquement entre le dispositif de refroidissement (4) et le sécheur de gaz (3).

6. Système de conduites (1) selon la revendication 5, **caractérisé en ce que** la conduite de dérivation (L) est connectée au canal de passage (K2) du deuxième tronçon (T2) avec un décalage excentrique.

7. Système de conduites (1) selon l'une quelconque des revendications précédentes, **caractérisé en ce que** la conduite de dérivation (L) présente une section transversale d'écoulement qui est inférieure à la section transversale d'écoulement du canal de passage (K1) du premier tronçon (T1).

8. Système de conduites (1) selon l'une quelconque des revendications précédentes, **caractérisé en ce que** le dispositif de dérivation (B) est réalisé de telle sorte qu'une quantité de gaz totale peut circuler par le dispositif de dérivation (B) à une vitesse de rotation maximale du presseur de gaz (2) si le passage de gaz (GP) par le dispositif de refroidissement (4) est bouché, et/ou **en ce que** seule une quantité de gaz négligeable peut circuler par le dispositif de dérivation (B) si le passage de gaz (GP) par le dispositif de refroidissement (4) n'est pas bouché.

9. Système de conduites (1) selon l'une quelconque des revendications précédentes, **caractérisé en ce que** le premier tronçon (T1) présente une configuration de raccordement (A1, A2) au moyen de laquelle il est intégré fluidiquement dans le système de conduites (1) entre le presseur de gaz (2) et le dispositif de refroidissement (4).

10. Système de conduites (1) selon l'une quelconque des revendications 5 à 9, **caractérisé en ce que** le deuxième tronçon (T2) présente une configuration de raccordement (A3, A4) au moyen de laquelle il est intégré fluidiquement dans le système de conduites (1) entre le dispositif de refroidissement (4) et le sécheur de gaz (3).

11. Système de conduites (1) selon l'une quelconque des revendications précédentes, **caractérisé en ce que** le dispositif de dérivation (B), en particulier le premier tronçon (T1), est disposé fluidiquement directement avant le dispositif de refroidissement (4) et/ou est monté sur le dispositif de refroidissement (4) .

12. Système de conduites (1) selon l'une quelconque des revendications précédentes, **caractérisé en ce que** le dispositif de dérivation (B), en particulier le deuxième tronçon (T2), est disposé fluidiquement directement après le dispositif de refroidissement (4) et/ou est monté sur le dispositif de refroidissement (4) .

13. Système de conduites (1) selon l'une quelconque des revendications précédentes, **caractérisé en ce que** la conduite de dérivation (L) débouche directement sur le sécheur de gaz (3) par l'intermédiaire d'un conduit ou d'un tuyau souple.

14. Système de conduites (1) selon l'une quelconque des revendications précédentes, **caractérisé en ce que** le sécheur de gaz (3) est relié à un consommateur de gaz, en particulier à un frein actionné par une force extérieure du véhicule utilitaire pour l'alimenter en gaz.

15. Véhicule utilitaire, de préférence camion ou bus, comprenant un système de conduites (1) selon l'une quelconque des revendications précédentes.
